# EUROPEAN PATENT SPECIFICATION

(11) **EP 2 907 473 B1**
(45) Date of publication and mention of the grant of the patent: **21.06.2017**
(21) Application number: 13844937.6
(22) Date of filing: 14.08.2013
(51) Int. Cl.: A61C 8/00, A61C 13/263, A61C 13/235, A61C 13/265

(54) **PALATAL IMPLANT FOR OVERDENTURE**
GAUMENIMPLANTAT FÜR EINE DECKPROTHESE
IMPLANT PALATIN POUR PROTHÈSE DENTAIRE

(30) Priority: 10.10.2012 KR 20120112158
(43) Date of publication of application: 19.08.2015
(73) Proprietor: Megagen Implant Co., Ltd., Gyeongsangbuk-do 712-852 (KR)
(72) Inventor: PARK, Kwang Bum, Daegu 706-776 (KR)
(74) Representative: Groth & Co. KB
(86) International application number: PCT/KR2013/007304
(87) International publication number: WO 2014/058149

(56) References cited:
- WO-A1-2012/132819
- JP-A- 2006 271 767
- JP-A- 2012 501 217
- KR-A- 20070 054 723
- KR-A- 20080 110 391
- KR-A- 20110 109 389
- KR-A- 20120 008 672
- KR-B1- 100 807 150
- US-A- 3 514 858
- US-A- 4 518 357
- US-A1- 2007 077 535
- US-A1- 2011 020 769

## Description

### TECHNICAL FIELD

The inventive concept relates to a palatal implant for an overdenture, and more particularly to a palatal implant for an overdenture, which is implanted in a palatal under various abnormal conditions that a surgical procedure of general implant placement for the overdenture is not easy, so that the overdenture can be readily and efficiently made.

### BACKGROUND ART

Regarding loss of a tooth, a dental clinic uses an implant prosthesis instead of the lost tooth.

For dental treatment, the implant prosthesis is classified into two, i.e., a stationary prosthesis and a removable prosthesis.

The former, i.e., the stationary prosthesis, which is an implant to use a common saying, has a merit of having the most similar shape to a human's tooth in light of its function. In other words, a surgical procedure can provide the most similar shape to a human's tooth because a fixture is implanted in a toothless place and then the prosthesis is completed to have a tooth shape.

However, one implant is required per tooth, and therefore a lot of implants are needed when almost the whole teeth are lost. For example, 10 or more implants may be needed for an upper jaw, and 8 or more implants may be needed for a lower jaw. Further, many surgical procedures may be needed, thereby incurring high costs.

In addition, the stationary prosthesis may have shortcomings that teeth may look too long, or sometimes do not support lips.

On the other hand, the removable prosthesis, so called an implant denture or an overdenture, is advantageous to support the lips since it can naturally recreate a shape of a gum, and reduces costs as compared with the stationary prosthesis.

Accordingly, it is not absolutely the case, and in some cases the removable prosthesis (e.g., the implant denture) may get better results.

The upper jaw and the lower jaw may be a little different in a method of manufacturing the denture. Usually, the lower jaw needs at least two implants, and the upper jaw needs at least four implants. These implants are implanted in corresponding placement positions, and then the dentures are coupled using a connecting device.

Unlike manufacture of a general denture, a denture using the implant, in particular, an upper jaw denture requires further efforts, time and costs.

Meanwhile, as described above, for a surgical procedure of the upper jaw denture, the implant has to be first placed in a previously determined position of the upper jaw.

In the surgical procedure for the implant placement, there is no serious problem if the amount of bones is normally sufficient in a ridge region of the upper jaw.

However, a surgical procedure for a general implant placement may be impossible under various abnormal conditions: for example, there is no alveolar bone due to old age, the amount of bones around the implant is insufficient, an additional surgical procedure such as bone grafting for the implant placement is impossible, it is determined that a success rate of a general implant surgical procedure is low, there is a patient who cannot use the implant, etc. Such conditions ask for alternatives. US 2011/020769 A1 discloses a palatal implant according to the preamble of claim 1.

### DETAILED DESCRIPTION OF THE INVENTIVE CONCEPT

### TECHNICAL PROBLEM

The inventive concept provides a palatal implant for an overdenture, which is implanted in a palatal under various abnormal conditions that a surgical procedure of general implant placement for the overdenture is not easy, so that the overdenture can be readily and efficiently made.

### ADVANTAGEOUS EFFECTS

According to the present exemplary embodiments, the palatal implant for the overdenture is implanted in the palatal under various abnormal conditions that a surgical procedure of general implant placement for the overdenture is not easy, so that the implant surgical procedure can be efficiently made.

### DESCRIPTION OF THE DRAWINGS

Exemplary embodiments of the inventive concept will be more clearly understood from the following detailed description taken in conjunction with the accompanying drawings in which:
FIG. 1 is an image of a palatal implant for an overdenture according to a first embodiment of the inventive concept;
FIG. 2 is a longitudinal section view of FIG. 1;
FIG. 3 is a view for explaining a placement position of the palatal implant for the overdenture of FIG. 1;
FIG. 4 shows various alternative examples of the palatal implant for the overdenture of FIG. 1;
FIG. 5 is a perspective view of a palatal implant for an overdenture according to an example which is not part of the present invention;
FIG. 6 is a view showing that the adjunct and the implant of FIG. 5 are assembled;
FIG. 7 is a longitudinal section view of FIG. 6;
FIG. 8 is a perspective view of a palatal implant for an overdenture according to an example which is not part of the present invention;
FIG. 9 is a view showing that the adjunct of FIG. 8 are assembled; and
FIG. 10 is an image of a palatal implant for an overdenture according to an embodiment of the inventive concept.

### TECHNICAL SOLUTION

According to an aspect of the inventive concept, there is provided a palatal implant for an overdenture, including: an implant placement body which is implanted in a previously determined placement position of a palatal for the overdenture by work of a screw portion formed on an outer surface thereof; and a head which includes a cuff connected to an upper portion of the implant placement body and is exposed to an outside at the placement position.

The implant placement body may be formed with a self-tapping sharpening portion in a lower end portion thereof so that the implant placement body can be implanted in the placement position by self tapping without drilling work.

The screw portion may be continuously tapered from the self-tapping sharpening portion forming the lower end portion of the implant placement body to the cuff.

A virtual line connecting an outline of the screw portion may include: a curved line portion formed from the self-tapping sharpening portion to a middle region of the implant placement body; and a straight line portion formed from the end of the curved line portion to the cuff.

The screw portion may include: a straight portion forming a fore-end portion of the screw portion; and a curved portion curvedly connected from an outer surface of the implant placement body to the straight portion of the screw portion.

The curved portion may be arranged symmetrically at opposite sides with respect to the straight portion.

The implant placement body may undergo surface treatment with calcium (Ca) ions for quick bone incorporation with the palatal.

The head may further include an adjunct connecting portion provided in the cuff to couple with an adjunct.

The adjunct connecting portion may further include a groove into which the adjunct is forcibly fitted.

The adjunct connecting portion may include a magnet to magnetically couple with the adjunct.

An edge of the adjunct connecting portion may be rounded.

The adjunct connecting portion may be provided in the form of a protrusion or a groove.

The cuff and the adjunct connecting portion may be formed as a single body, and the head may undergo surface treatment with zirconium nitride (ZrN).

The implant placement body may have a length of 4 to 6 mm.

The placement position may correspond to a point distant from a center line toward a premolar tooth by 4 to 6 mm.

If the amount of bones in the palatal is small, the palatal implant may be diagonally implanted at the placement position.

The cuff may be manufactured to have various lengths in accordance with classifications.

### BEST MODE OF THE INVENTIVE CONCEPT

The attached drawings for illustrating embodiments of the inventive concept are referred to in order to gain a sufficient understanding of the inventive concept and the merits thereof.

Hereinafter, the invention will be described in detail by explaining embodiments of the inventive concept with reference to the attached drawings. Like reference numerals in the drawings denote like elements.

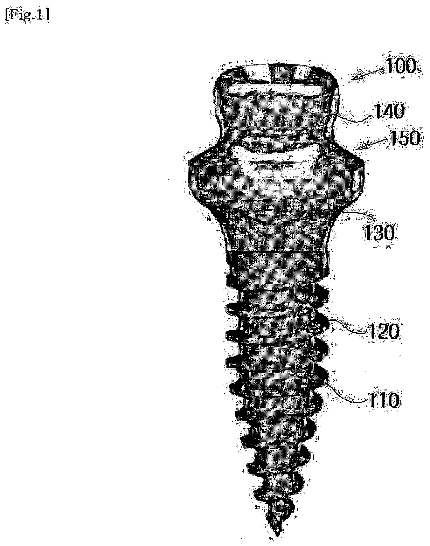

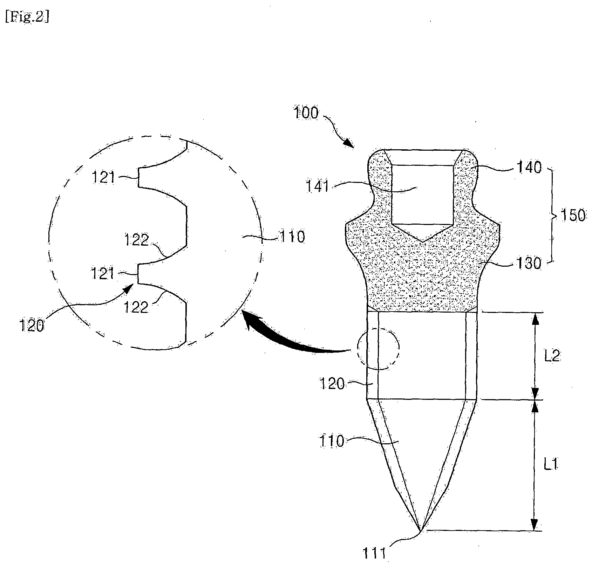

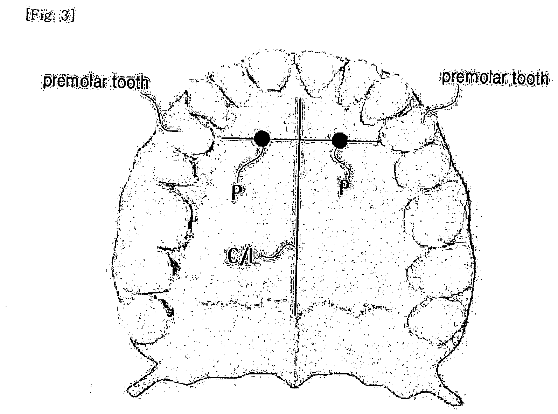

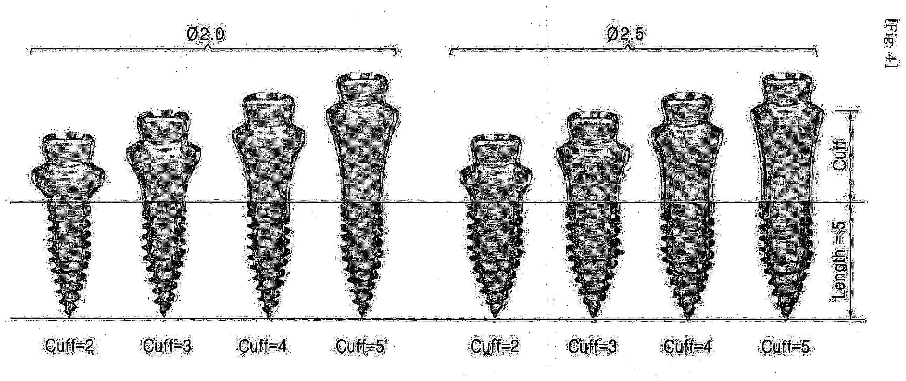

FIG. 1 is an image of a palatal implant for an overdenture according to a first embodiment of the inventive concept; FIG. 2 is a longitudinal section view of FIG. 1; FIG. 3 is a view for explaining a placement position of the palatal implant for the overdenture of FIG. 1; and FIG. 4 shows various alternative examples of the palatal implant for the overdenture of FIG. 1.

As shown therein, a palatal implant 100 for an overdenture in this embodiment is placed in a palatal to efficiently perform an implant surgical procedure under various abnormal conditions that a general implant surgical procedure is difficult.

In this embodiment, the palatal implant 100 for the overdenture includes an implant placement body 110 formed with a screw portion 120 on an outer surface thereof, and placed in a previously determined placement position P (refer to FIG. 3) of the palatal by work of the screw portion 120, and a head 150 connected to an upper portion of the implant placement body 110 and exposed to the outside at the placement position P.

The head 150 includes a cuff 130 connected to the upper portion of the implant placement body 110, and an adjunct connecting portion 140 provided in the cuff 130 for connection with an adjunct (not shown).

First, the implant placement body 110 indicates a region except the cuff 130 and the adjunct connecting portion 140 in FIG. 1 and FIG. 2.

The implant placement body 110 is implanted in a previously determined placement position P (refer to FIG. 3) of the palatal by work of the screw portion 120 formed on the outer surface thereof.

In this embodiment, the placement position P for the palatal implant 100 for the overdenture may correspond to a point distant from a center line (C/L) toward a premolar tooth by about 4 to 6 mm as shown in FIG. 3, and preferably by 5 mm.

In general, the palatal implant 100 for the overdenture is vertically implanted. However, if the amount of bones in the palatal is small, the palatal implant 100 may be diagonally implanted at the placement position P.

The implant placement body 110 is manufactured in the form of a sharp screw having no cutting edge.

In particular, the implant placement body 110 is formed with a self-tapping sharpening portion 111 for self tapping at a lower end portion thereof so that it can be implanted in the placement position P (refer to FIG. 3) without drilling work.

Like this, the self-tapping sharpening portion 111 is formed at the lower end portion of the implant placement body 110, so that the palatal implant 100 for the overdenture in this embodiment can be conveniently implanted without any separate drilling work, as long as the palatal implant 100 for the overdenture is rotated while the self-tapping sharpening portion 111 is put on the placement position P. In particular, implantation work is advantageously convenient.

On the outer surface of the implant placement body 110, the screw portion 120 is formed so that the implant placement body 110 can be implanted into the placement position P.

The screw portion 120 is continuously tapered from the self-tapping sharpening portion 111 forming the lower end portion of the implant placement body 110 to the cuff 130. In this embodiment, the screw portion 120 is formed as a knife edge thread so that it can be sharply implanted without resisting bone density. That is, an edge forming the screw portion 120 is shaped like the blade of a knife.

Referring to FIG. 1 and FIG. 2, the screw portion 120 will be described in more detail. In this embodiment, a virtual line connecting the outline of the screw portion 120 includes a curved line portion L1 formed from the self-tapping sharpening portion 111 to an approximately middle region of the implant placement body 110, and a straight line portion L2 formed from the end of the curved line portion L1 to the cuff 130.

After the curved line portion L1 burrows into the placement position P, the straight line portion L2 serves to provide strong fixation power.

Further, the screw portion 120 is shaped like a square thread as enlarged in FIG. 2. Of course, the screw portion 120 is not the complete square thread, but a modified form of combination between a square thread and a trapezoidal thread.

Specifically, the screw portion 120 includes a straight portion 121 forming a fore-end of the screw portion 120, and a curved portion 122 connected from the outer surface of the implant placement body 110 to the straight portion 121 of the screw portion 120.

At this time, the curved portions 122 are symmetrically arranged at opposite sides with respect to the straight portion 121. Such features of the screw portion 120 provide the fixation power stronger than that of a typical implant.

Meanwhile, in this embodiment, the implant placement body 110 including the screw portion 120 undergoes a surface treatment with calcium (Ca) ions for quick bone incorporation with the palatal. Such a surface treatment may advantageously cause optimum surface roughness and shorten a healing period.

The length of the implant placement body 110 may be 4 to 6 mm, for example, 5 mm, but not limited thereto.

The cuff 130 is connected to the upper portion of the implant placement body 110. The cuff 130 may be manufactured to have various lengths according to classifications so as to cope with various margins as shown in FIG. 4.

For example, referring to FIG. 4, left four implant placement bodies 110 and right four implant placement bodies have diameters of 2.0 mm and 2.5 mm, respectively. Further, the implant placement bodies 110 having the same diameter may be different in length of the cuff 130.

Thus, the cuffs 130 are manufactured to have various lengths, and selectively applied in accordance with states of a patient, thereby flexibly coping with various margins at the implant surgical procedure.

The adjunct connecting portion 140 is a part protruding upward from the upper end of the cuff 130. The adjunct connecting portion 140 is a provided in the cuff 130 to connect with the adjunct (not shown) such as an implant cover, an abutment or various parts for fixing the denture. In this embodiment, the adjunct connecting portion 140 has a protruding shape.

The adjunct connecting portion 140 may be internally formed with a groove 141 into which the adjunct can be forcibly fitted. However, a top of the adjunct connecting portion 140 or the adjunct connecting portion 140 itself may be made of a magnet and thus magnetically coupled with the adjunct.

An edge of the adjunct connecting portion 140 may be rounded so as to facilitate the connection with the adjunct. That is, even if the palatal implant 100 for the overdenture in this embodiment is obliquely implanted, the adjunct can be easily connected to the adjunct connecting portion 140.

Meanwhile, the cuff 130 and the adjunct connecting portion 140 may be formed as a single body to form the head 150. At this time, the head 150 may undergo surface treatment with zirconium nitride (ZrN) unlike the foregoing implant placement body 110.

For reference, the regions of the cuff 130 and the adjunct connecting portion 140, surfaces of which are treated with zirconium nitride (ZrN), are more decreased in current density and more increased in corrosion resistance and hardness than those of before the surface treatment, and show gold color as a scratch or the like defects are removed.

With this configuration, the surgical procedure of the palatal implant 100 for the overdenture will be described.

First, it is checked whether the palatal implant 100 for the overdenture has to be implanted in the palatal since the ridge of the upper jaw is insufficient.

If the palatal implant 100 for the overdenture has to be implanted in the palatal, the placement position P (refer to FIG. 3) is first set up with regard to the palatal implant 100 for the overdenture.

The placement position P for the palatal implant 100 for the overdenture may correspond to a point distant from the center line (C/L) toward the premolar tooth by about 4 to 6 mm as shown in FIG. 3, and preferably by 5 mm.

If the position of the premolar tooth is not known, it may be determined based on an end of a palate. Here, the palate refers to an upper portion of a mouth.

In general, the palatal implant 100 for the overdenture is vertically implanted. However, if the amount of bones in the palatal is small, the palatal implant 100 may be diagonally implanted at the placement position P.

After the placement position P is set up, the palatal implant 100 for the overdenture is inserted in a designated driver and then the driver is rotated while the self-tapping sharpening portion 111 of the implant placement body 110 is put on the placement position P, thereby implanting the palatal implant 100 for the overdenture.

When the palatal implant 100 for the overdenture is completely implanted, the position is marked with paint or the like, and then a housing is mounted to the marked position.

With the foregoing structure and function according to an embodiment of the inventive concept, the palatal implant 100 for the overdenture is implanted in the palatal under various abnormal conditions that a surgical procedure of general implant placement for the overdenture is not easy, so that the implant surgical procedure can be readily and efficiently made.

In other words, the palatal implant 100 for the overdenture according to an embodiment of the inventive concept is implanted in the palatal under various abnormal conditions: for example, there is no alveolar bone due to old age, the amount of bones around the implant is insufficient, an additional surgical procedure such as bone grafting for the implant placement is impossible, it is determined that a success rate of a general implant surgical procedure is low, there is a patient who cannot use the implant, etc. so that the implant surgical procedure can be readily and efficiently made.

In particular, the implant can be placed in the palatal, i.e., the roof of the mouth so that dental treatment can be increased in variety. Further, the implant can be placed by only hands without any separate drilling, thereby facilitating the work.

Also, the palatal implant 100 can be provided at low cost as compared with the existing implant. Further, the palatal implant 100 is excellent in fixation power, and allows the surgical procedure to be performed soon after failure of implantation.

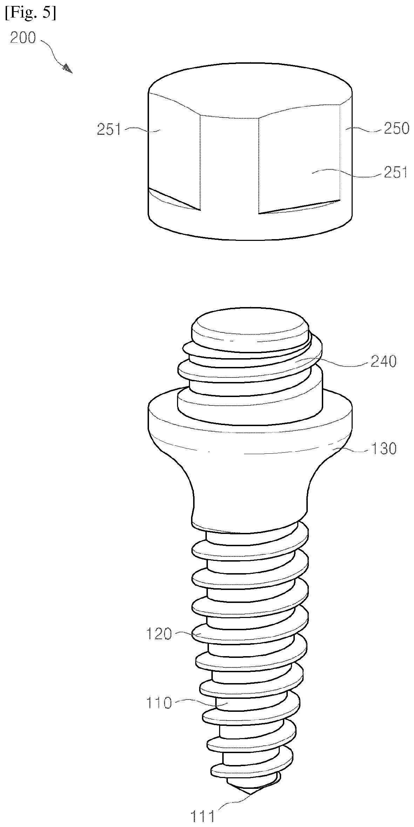

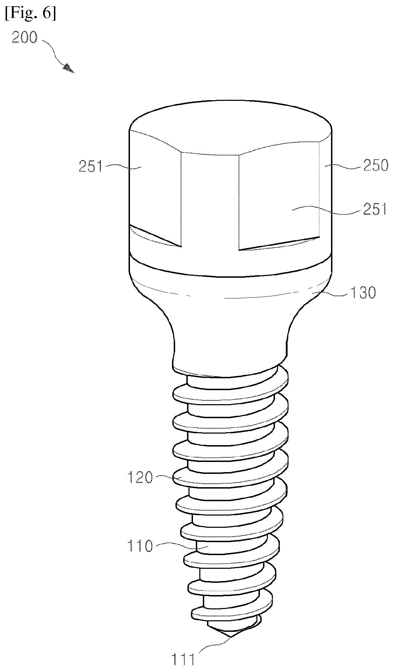

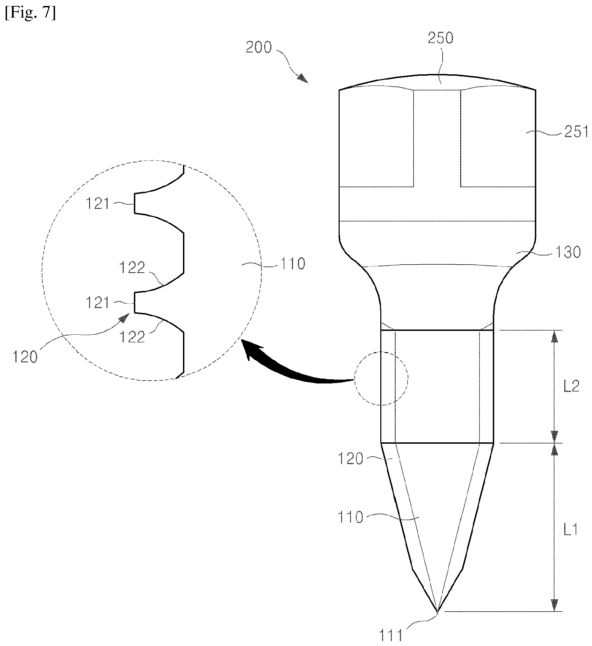

FIG. 5 is a perspective view of a palatal implant for an overdenture according to an example which is not part of the present invention, in which adjunct are separated; FIG. 6 is a view showing that the adjunct and the implant of FIG. 5 are assembled; and FIG. 7 is a longitudinal section view of FIG. 6.

As shown therein, a palatal implant 200 for the overdenture in this embodiment includes an implant placement body 110 formed with a screw portion 120 on an outer surface thereof, and placed in a previously determined placement position P (refer to FIG. 3) of the palatal by work of the screw portion 120, a cuff 130 connected to an upper portion of the implant placement body 110, and an adjunct connecting portion 140 provided in the cuff 130 for connection with an adjunct 250 such as an implant cover.

The structures and functions of the implant placement body 110, the screw portion 120 and the cuff 130 in this embodiment are the same as those of the foregoing embodiment, and thus descriptions of the implant placement body 110, the screw portion 120 and the cuff 130 will be replaced by the foregoing descriptions.

Meanwhile, in the palatal implant 200 for the overdenture according to this embodiment, the adjunct connecting portion 240 is provided in the form of a protrusion, in particular, in the form of a threaded protrusion.

Further, the adjunct 250 is screw-coupled to the adjunct connecting portion 240 provided in the form of the threaded protrusion.

At this time, a wrench engaging portion 251 is formed on an outer surface of the adjunct 250. The wrench engaging portion 251 forms a part with which a wrench drive is engaged.

The adjunct 250 may be used as an abutment for coupling with a separate maintaining device (not shown).

With the foregoing structure and function according to an embodiment of the inventive concept, the palatal implant 200 for the overdenture is implanted in the palatal under various abnormal conditions that a surgical procedure of general implant placement for the overdenture is not easy, so that the implant surgical procedure can be efficiently made.

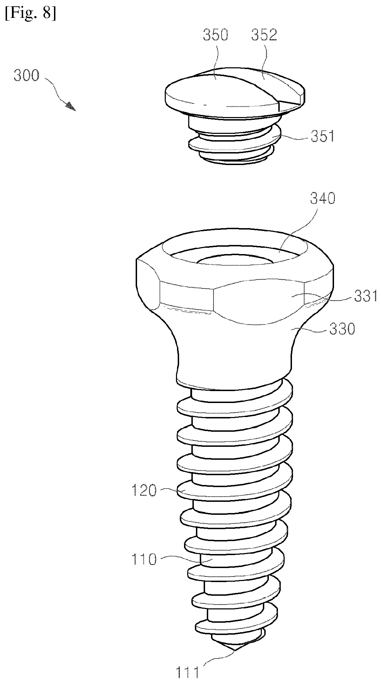

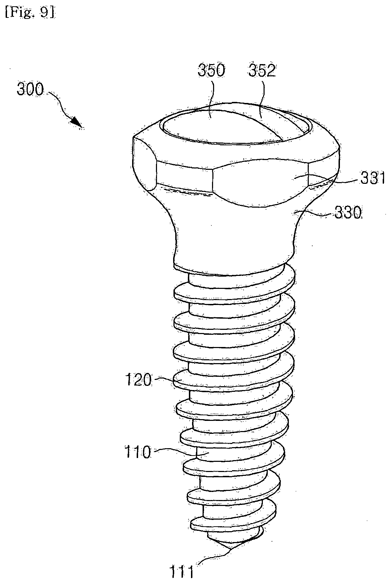

FIG. 8 is a perspective view of a palatal implant for an overdenture according to an example which is not part of the present invention, in which the adjunct and the implant are separated; and FIG. 9 is a view showing that the adjunct and the implant of FIG. 8 are assembled.

As shown therein, a palatal implant 300 for the overdenture in this embodiment includes an implant placement body 110 formed with a screw portion 120 on an outer surface thereof, and placed in a previously determined placement position P (refer to FIG. 3) of the palatal by work of the screw portion 120, a cuff 330 connected to an upper portion of the implant placement body 110, and an adjunct connecting portion 340 provided in the cuff 330 for connection with an adjunct 350 such as an implant cover.

In this example, the adjunct connecting portion 340 is provided in the form of a groove. Thus, the adjunct 350 is screw-coupled to the adjunct connecting portion 340 provided in the form of the groove.

To this end, the adjunct 350 is formed with a screw coupling portion 351 which is inserted in and screw-coupled to the adjunct connecting portion 340. The adjunct 350 may be coupled to the adjunct connecting portion 340 through a driver groove 353 formed on the top thereof.

On the outer surface of the cuff 330, a wrench engaging portion 331 is provided for implanting the palatal implant 300 for the overdenture in this example.

With the foregoing structure and function according to an example which is not part of the present invention, the palatal implant 300 for the overdenture is implanted in the palatal under various abnormal conditions that a surgical procedure of general implant placement for the overdenture is not easy, so that the implant surgical procedure can be efficiently made.

In use, the palatal implant for the overdenture is implanted in the palatal under various abnormal conditions that a surgical procedure of general implant placement for the overdenture is not easy, so that the implant surgical procedure can be efficiently made.

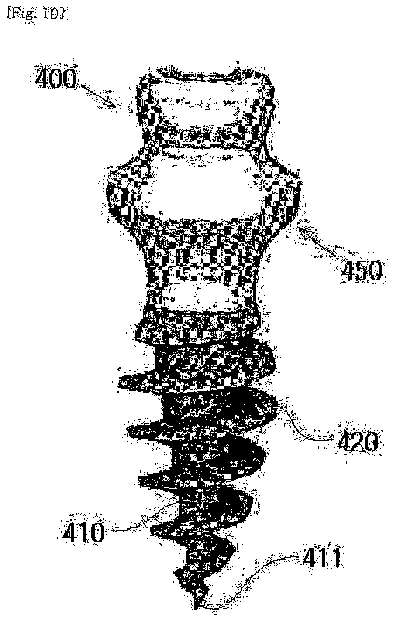

FIG. 10 is an image of a palatal implant for an overdenture according to an embodiment of the present invention.

As shown therein, a palatal implant 400 for the overdenture includes an implant placement body 410 formed with a screw portion 420 on an outer surface thereof, and placed in a previously determined placement position P (refer to FIG. 3) of the palatal by work of the screw portion 420, and a head 450 connected to an upper portion of the implant placement body 410 and exposed to the outside at the placement position P.

With this configuration, virtual line connecting the outline of the screw portion 420 is continuously tapered from a self-tapping sharpening portion 411 of the implant placement body 410 to the head 450. Such structural features allow the implant placement body 410 to be easily implanted by self tapping without drilling work.

While the present invention has been particularly shown and described with reference to exemplary embodiments thereof, it will be understood that various changes in form and details may be made therein without departing from the scope of the following claims.

### INDUSTRIAL APPLICABILITY

The present inventive concept is applicable to the field of a dental care.

## Claims

1. A palatal implant (100) for an overdenture, comprising:
an implant placement body (110) which is implantable in a previously determined placement position of a palatal for the overdenture by work of a screw portion (120) formed on an outer surface thereof; and
a head (150) which comprises a cuff (130) connected to an upper portion of the implant placement body (110) and an adjunct connecting portion (140) provided in the cuff (130) to couple with an adjunct, and is exposable to an outside at the placement position, wherein the adjunct connecting portion (140) is provided in the form of a protrusion upward from an upper end of the cuff (130),
the cuff (130) and the adjunct connecting portion (140) are formed as a single body, **characterised in that** an edge of the adjunct connecting portion (140) is rounded, and
the adjunct connecting portion (140) comprises a magnet to magnetically couple with the adjunct.

## Patentansprüche

1. Gaumenimplantat (100) für eine Deckprothese, umfassend:
einen Implantatplatzierungskörper (110), der in einer zuvor bestimmten Platzierungsposition eines Gaumenknochens für die Deckprothese mittels eines an einer Außenfläche davon gebildeten Schraubenabschnitts (120) implantierbar ist, und
einen Kopf (150), der einen Bund (130), der mit einem oberen Abschnitt des Implantatplatzierungskörpers (110) verbunden ist, und einen im Bund (130) vorgesehenen Zusatzverbindungsabschnitt (140) umfasst, um an einen Zusatz anzukoppeln, und an der Platzierungsposition an eine Außenseite freilegbar ist,
wobei
der Zusatzverbindungsabschnitt (140) in der Form eines von einem oberen Ende des Bunds (130) nach oben ragenden Vorsprungs vorgesehen ist,
der Bund (130) und der Zusatzverbindungsabschnitt (140) als ein einziger Körper ausgebildet sind, **dadurch gekennzeichnet, dass** ein Rand des Zusatzverbindungsabschnitts (140) abgerundet ist und der Zusatzverbindungsabschnitt (140) einen Magneten umfasst, um magnetisch mit dem Zusatz zu koppeln.

## Revendications

1. Implant palatin (100) pour une prothèse amovible complète supra-implantaire, comprenant :
un corps de pose d'implant (110) qui est implantable à un emplacement de pose déterminé précédemment d'un palais pour la prothèse amovible complète supra-implantaire au moyen d'une partie filetée (120) formée sur une surface extérieure de celui-ci ; et
une tête (150) qui comprend une douille (130) raccordée à une partie supérieure du corps de pose d'implant (110) et une partie de raccordement d'élément complémentaire (140) prévue dans la douille (130) à des fins d'accouplement avec un élément complémentaire, et qui peut être exposée à une région extérieure au niveau de l'emplacement de pose, la partie de raccordement d'élément complémentaire (140) étant réalisée sous la forme d'une protubérance orientée vers le haut à partir d'une extrémité supérieure de la douille (130), la douille (130) et la partie de raccordement d'élément complémentaire (140) étant réalisées sous la forme d'un corps d'un seul tenant,
**caractérisé en ce qu'**un bord de la partie de raccordement d'élément complémentaire (140) est arrondi, et la partie de raccordement d'élément complémentaire (140) comprend un aimant à des fins d'accouplement magnétique avec l'élément complémentaire.
